# EUROPEAN PATENT APPLICATION

(11) **EP 3 457 635 A1**
(43) Date of publication of application: **20.03.2019**
(21) Application number: 17306203.5
(22) Date of filing: 18.09.2017
(51) Int. Cl.: H04L 12/28

(54) **METHOD AND DEVICE FOR IDENTIFYING A USER IN AN ENVIRONMENT**

(71) Applicant: Thomson Licensing, 92130 Issy-les-Moulineaux (FR)
(72) Inventor: SCHNITZLER, François, 35576 Cesson-Sévigné Cedex (FR); HOWSON, Christopher, 35576 Cesson-Sévigné Cedex (FR); FONTAINE, Patrick, 35576 Cesson-Sévigné Cedex (FR)
(74) Representative: Huchet, Anne

(57) **Abstract**

In a context of sensor equipped environments such as buildings or houses, that various users are entering and leaving, sensors are able to generate data resulting from user activities, as the users are spending time in the environment. Moreover, as users become more connected, they frequently carry with them connectable communications devices such as smartphones or any kind of wearable connected device. A salient idea is to detect recurrent patterns from data collected from sensors of the environment, resulting from user activities, and to collect other data representative of a temporal presence or absence of a communication device in the environment by for example, tracking the connections and disconnections of the communication device to a wireless network of the environment. Specific patterns are advantageously identified among all detected patterns by matching the occurrence time of these detected patterns to periods of presence of the communication device using statistics (for example by evaluating the number of occurrences of a pattern in a period of presence versus the total number of occurrences of the pattern). A model is trained by advantageously associating these specific identified patterns with the communication device without requiring explicit and laborious data labeling. A user, being associated with the communication device is then identified by a detection of one of the specific patterns (that has been associated with the communication device as the model has been trained) from subsequent data collected from the sensors.

## Description

### 1. TECHNICAL FIELD

The present disclosure relates to the domain of smart homes involving pervasive sensors, home gateways and personalization applications.

### 2. BACKGROUND ART

Typical approaches to building a model based on pervasive sensors involve collecting sensor data, labeling data points with, for example, the name of the resident who triggered these measurements, using a supervised learning algorithm on this labeled data to identify relevant patterns and using these patterns to identify people. Supervised learning algorithms build a prediction model. Such algorithms take as input a set of labeled examples, where each example contains a vector of feature values and a label. The resulting prediction model takes as input a vector of feature values and outputs a predicted label. Labeling the data set is however cumbersome for users. Generating labeled data typically involves repeating an action several times and potentially over several days or specifying who triggered every particular measurement over a few days. Laborious labeling remains however unavoidable in the application of existing supervised learning algorithms. There is a need for new methods for automatically identifying a user in an environment based on detected sensor data without requiring extensive labelling of a data set.

### 3. SUMMARY

In a context of sensor equipped environments such as buildings or houses, that various users are entering and leaving, sensors are able to generate data resulting from user activities, as the users are spending time in the environment. Moreover, as users become more connected, they frequently carry with them connectable communications devices such as smartphones or any kind of wearable connected device. A salient idea is to detect recurrent patterns from data collected from sensors of the environment, resulting from user activities, and to collect other data representative of a temporal presence or absence of a communication device in the environment by for example, tracking the connections and disconnections of the communication device to a wireless network of the environment. Specific patterns are advantageously identified among all detected patterns by matching the occurrence time of these detected patterns to periods of presence of the communication device using statistics (for example by evaluating the number of occurrences of a pattern in a period of presence versus the total number of occurrences of the pattern). A model is trained by advantageously associating these specific identified patterns with the communication device without requiring explicit and laborious data labeling.

A user, being associated with the communication device is then identified by a detection of one of the specific patterns (that has been associated with the communication device as the model has been trained) from subsequent data collected from the sensors. The use of statistics for the evaluation of the temporal matching while training the model is advantageous as a detected pattern cannot be directly temporally matched to a communication device for at least the following reasons: the user may not always carry the communication device with her as she is moving around entering and/or leaving the environment, the communication device may be sometimes powered off. The clocks of the sensors and the device processing the disclosed principles are not likely to be synchronized...Therefore, a user can be advantageously identified from a detection of a pattern associated with her communication device despite the communication being disconnected from the wireless network of the environment while the pattern is detected.

To that end a method for identifying a user in an environment is disclosed. The method comprises:
- obtaining a sequence of information items representative of a temporal presence of a communication device in the environment, the communication device being associated with the user;
- obtaining a set of temporal patterns of a first sensor in the environment;
- associating a temporal pattern of the set of temporal patterns with the sequence of information items based on evaluating a temporal matching of the temporal pattern to the sequence of information items;
- identifying the user by a detection of a subsequent pattern in a subsequent set of patterns, the subsequent pattern being similar to the associated temporal pattern of the set of temporal patterns.

According to a particularly advantageous, obtaining the sequence of information items comprises monitoring whether the communication device is connected to a wireless network of the environment.

According to another particularly advantageous variant, each information item of the sequence is associated with a time value, the information item indicating whether the communication device is connected to or disconnected from the wireless network of the environment at the time value.

According to another particularly advantageous variant, the method further comprises obtaining a first sequence of timestamped data items from the first sensor and applying a pattern detection algorithm to the first sequence of timestamped data items to obtain the set of temporal patterns, each temporal pattern being associated with a plurality of occurring time values.

According to another particularly advantageous variant, the method further comprises obtaining a second sequence of timestamped data items from a second sensor of the environment and applying a multi sequence pattern detection algorithm to at least the first and the second sequences of timestamped data items to obtain the set of temporal patterns.

According to another particularly advantageous variant, evaluating the temporal matching comprises:
- obtaining a time window around each time value of the sequence of information items;
- obtaining a matching score of the temporal pattern to the sequence of information items by dividing a first number of time windows comprising an occurring time value of the temporal pattern, by a second number of occurrences of the temporal pattern outside any time window of the sequence of information items.

According to another particularly advantageous variant, the temporal pattern is associated with the sequence of information items in case the matching score is above a given value.

According to another particularly advantageous variant, the method further comprises:
- obtaining a plurality of sequences of information items each sequence of information items being representative of a temporal presence of a different communication device;
- evaluating the temporal matching of the temporal pattern to each sequence of the plurality of sequences, wherein a plurality of matching scores of the temporal pattern is obtained, each matching score corresponding to a different sequence of the plurality of sequences;
- associating the temporal pattern with the sequence of the plurality of sequences corresponding to the highest matching score among the obtained plurality of matching scores.

According to another particularly advantageous variant, the method further comprises updating a profile associated with the user based on the detection of the subsequent pattern.

According to another particularly advantageous variant, the user is identified by the detection of the subsequent pattern in the subsequent set of patterns, although the communication device is not present in the environment.

In a second aspect, a device for identifying a user in an environment is also disclosed. The device comprises:
- means for obtaining a sequence of information items representative of a temporal presence of a communication device in the environment, the communication device being associated with the user;
- means for obtaining a set of temporal patterns of a first sensor in the environment;
- means for associating a temporal pattern of the set of temporal patterns with the sequence of information items based on evaluating a temporal matching of the temporal pattern to the sequence of information items;
- means for identifying the user by a detection of a subsequent pattern in a subsequent set of patterns, the subsequent pattern being similar to the associated temporal pattern of the set of temporal patterns.

According to a particularly advantageous variant, means for obtaining the sequence of information items further comprises means for monitoring whether the communication device is connected to a wireless network of the environment.

According to a particularly advantageous variant, each information item of the sequence is associated with a time value, the information item indicating whether the communication device is connected to or disconnected from the wireless network of the environment at the time value.

According to a particularly advantageous variant, the device further comprises means for obtaining a first sequence of timestamped data items from the first sensor and applying a pattern detection algorithm to the first sequence of timestamped data items to obtain the set of temporal patterns, each temporal pattern being associated with a plurality of occurring time values.

In a third aspect, a device for identifying a user in an environment is also disclosed. The device comprises a processor configured to:
- obtain a sequence of information items representative of a temporal presence of a communication device in the environment, the communication device being associated with the user;
- obtain a set of temporal patterns of a first sensor in the environment;
- associate a temporal pattern of the set of temporal patterns with the sequence of information items based on evaluating a temporal matching of the temporal pattern to the sequence of information items;
- identify the user by a detection of a subsequent pattern in a subsequent set of patterns, the subsequent pattern being similar to the associated temporal pattern of the set of temporal patterns.

In a fourth aspect, a computer program product for identifying a user in an environment is also disclosed. The computer program product comprises program code instructions executable by a processor for performing the method implemented in any of its variants.

In a fifth aspect, a non-transitory computer-readable storage medium storing computer-executable program instructions for identifying a user in an environment is also disclosed. The computer-readable storage medium comprises instructions of program code executable by at least one processor to perform the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described patterns examples and any other type of patterns is compatible with the disclosed principles. The present principles are not further limited to the described pattern detection algorithms and are applicable to any other pattern detection technique. The present principles are not further limited to the described wireless network examples.

Besides, any characteristic, variant or embodiment described for a method is compatible with a device comprising means for processing the disclosed method, with a device comprising a processor configured to process the disclosed method, with a computer program product comprising program code instructions and with a non-transitory computer-readable storage medium storing program instructions.

### 4. BRIEF DESCRIPTION OF THE DRAWINGS

- **Figure 1** illustrates a method for identifying a user in an environment according to a specific and non-limiting embodiment;
- **Figure 2** illustrates an example of temporal matching scores according to a specific and non-limiting embodiment;
- **Figure 3** represents a processing device identifying a user in an environment according to a specific and non-limiting embodiment;
- **Figure 4** represents an exemplary architecture of the processing device of figure 3 according to a specific and non-limiting embodiment.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to user identification in an environment, wherein the user is associated with at least one communication device.

By communication device, it is meant here and throughout the document a portable device equipped with a wireless network interface, such as for example and without limitation a smartphone, a wearable connected device, a pad, a tablet or any Internet of Things device, a user may take or carry with him.

By environment, it is meant here and throughout the document a specific physical area, such as for example a house, a building, a flat of a building, a room of a house or a flat, where people are likely to spend time and having some activities. In the disclosed principles, the environment comprises a set of sensors, being located around in the environment, or located on objects of the environment. The sensors comprise for example and without limitation infrared sensors, magnetic door sensors, temperature sensors, light sensors, humidity sensors, vibration sensors, movement sensors (such as accelerometers or geophones), pressure sensors, radio frequency identification (RFID) sensors, power meters, ....

In the disclosed principles, the environment further comprises at least one wireless network such as for example and without limitation a Wi-Fi, a Bluetooth, a Zigbee or a Zwave wireless network. The environment further comprises at least one other device than the communication device mentioned hereabove, the other device also being equipped with a wireless network interface compliant with the wireless network of the environment. For example, the environment comprises a gateway providing a connection to Internet, the gateway also embedding a Wi-Fi access point providing connection to the wireless network. In another example, the environment comprises a device, such as a TV set or a set-top-box embedding a Bluetooth interface for pairing with accessories. In yet another example the gateway, or any other device of the environment embeds Internet of Things endpoints compliant to Zigbee or Zwave. For the sake of clarity and without loss of generality the disclosed principles will be described with a gateway connected to a wireless network of the environment, but any other device of the environment also connected to the wireless network is compatible with the disclosed principles.

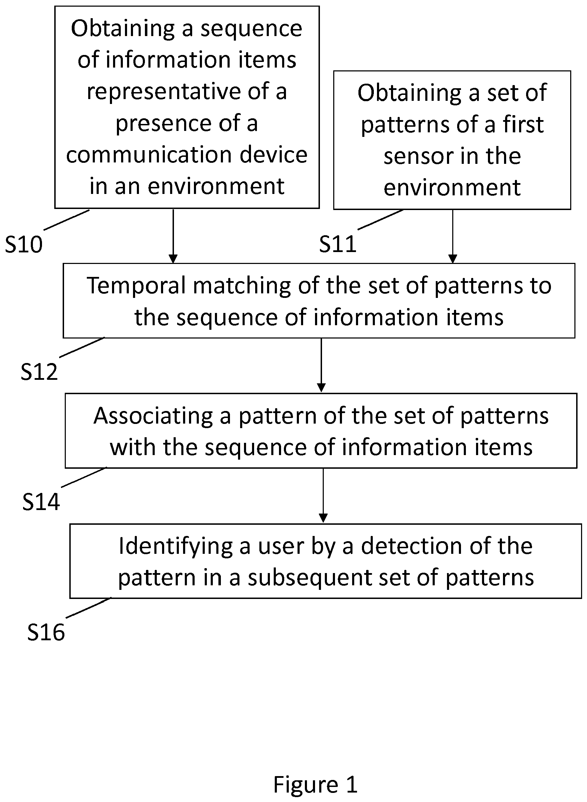

**Figure 1** illustrates a method for identifying a user in an environment according to a specific and non-limiting embodiment of the disclosed principles. The user is associated with a communication device she frequently carries with her. As mentioned above the communication device is for example the smartphone of the user or any connected device such as a smartwatch or any wearable device the user generally carries with her. Advantageously the communication device is identified by the MAC (Medium Access Control) address of its wireless network interface, but any network identifier, uniquely identifying the communication device is compatible with the disclosed principles.

In the step S10, a sequence of information items representative of a temporal presence of the communication device in the environment is obtained. Depending on the time, the communication device may be in the environment, or out of the environment. The temporal presence of the communication device is advantageously represented as a set of consecutive periods of time comprising periods of presence during which the communication device is connected to the wireless network, and periods of absence during which the communication device is disconnected from the wireless network of the environment. The transition from a period of presence to a period of absence is called a device departure event and the transition from a period of absence to a period of presence is called a device arrival event.

The sequence of information items is for example obtained by monitoring over time whether the communication device is connected to or disconnected from the wireless network of the environment.

According to a first and non-limiting embodiment of the disclosed principles, the gateway embedding a Wi-Fi access point, monitors the Wi-Fi devices that are associated with the access point and periodically stores that information in a memory as a set of successive time reports. More precisely, a time report comprises a time value as well as the MAC addresses of the Wi-Fi devices (i.e. at least one MAC address per Wi-Fi device) that have been detected associated with the access point at the corresponding time value. The term associated means here associated in the sense of the IEEE 802.11 association protocol. In a variant, the access point of the environment further detects IEEE 802.11 probe requests sent by active Wi-Fi devices present in the range of the access point but not associated with the access point. In that variant, the time reports further comprise the MAC addresses of Wi-Fi devices (retrieved from the detected IEEE 802.11 probe requests) as well as the time values at which the probe requests have been detected.

According to a second and non-limiting embodiment of the disclosed principles, the gateway comprises a Bluetooth network interface and monitors which devices are paired with the gateway. The gateway then also periodically stores successive time reports in memory, each time report comprising a time value and the MAC addresses of the Bluetooth devices that are paired with the gateway at the corresponding time value. In a variant, time values and MAC addresses of Bluetooth devices that are visible to the gateway, although not necessarily paired with the gateway are also stored in the successive time reports. In yet another variant, the gateway monitors Bluetooth Low Energy advertisements from unpaired devices and stores the MAC addresses of these unpaired devices as well as the time values at which the low Bluetooth Low Energy advertisements have been detected.

According to a third and non-limiting embodiment of the disclosed principles, the gateway comprises a Zigbee or Zwave network interface and stores in the memory successive time reports comprising times values and identifiers of Zigbee or Zwave tag events.

More generally any method for monitoring any wireless data traffic generated by any wireless device in the wireless network of the environment and for storing the monitored information in a set of successive time reports, each time report comprising wireless device identifiers together with time values at which the data traffic of the wireless devices has been detected, is compatible with the disclosed principles.

Successive reports, stored according to any embodiment described hereabove, are processed, for example by the gateway, to detect the arrival or the departure of the communication device in or from the environment. As described above, and according to any embodiment, each time report associated with a time value indicates whether the communication device is connected to or disconnected from the wireless network at the corresponding time value. More precisely, the time report indicates that the communication device is connected to the wireless network at the corresponding time value in case the MAC address of the communication device is included in the time report. Similarly, the communication device is disconnected from the wireless network at the corresponding time value in case the MAC address of the communication device is not included in the time report.

In a first variant, device departure events are detected in case the communication device is connected to the wireless network for at least K successive reports and disconnected for the next at least K' successive reports, K and K' being integer values comprised for example between five and ten. Similarly, device arrival events are detected in case the communication device is disconnected from the wireless network for at least P successive reports, and connected for the next at least P' successive reports, P and P' being integer values also comprised for example between five and ten. Advantageously K, K', P and P' are identical values. In that first variant, the device departure event is considered as occurring at the last of the K reports showing the communication device is connected or at the first of the K' reports showing the communication device is disconnected (or at any time between those reports). Similarly, the device arrival event is considered as occurring at the last of the P reports showing the communication device is disconnected or at the first of the P' reports showing the communication device is connected (or at any time between those reports).

In a second variant device arrival and departure events are detected by processing the successive reports over a sliding time window. More precisely, considering a first and a second consecutive and non-overlapping time windows of a same duration, a device arrival event is detected in case the first time window does not comprise any report indicating the communication device being connected to the wireless network, and the second time window comprises at least one time report indicating the communication device being connected to the wireless network. The occurring time of the device arrival event is for example the time value of the first of the at least one time report of the second window indicating the communication device being connected to the wireless network. Any time value close to that time value (preferably before) is compatible with the disclosed principles. Similarly, a device departure event is detected in case the first time window comprises at least one time report indicating the communication device being connected to the wireless network, and the second time window does not comprise any time report indicating the communication device being connected to the wireless network. The occurring time of the device departure event is for example the time value of the last of the at least one time report of the first window indicating the communication device being connected to the wireless network. Any time value close to that time value (preferably after) is compatible with the disclosed principles. The duration of the time windows is comprised for example between ten seconds to ten minutes. In a variant, the consecutive first and second time windows are overlapping. In yet another variant, the first and the second time windows have different durations.

The sequence of information items representative of the temporal presence of the communication device in the environment is obtained from the processing of the consecutive time reports in any of the variants described above. Each information item of the sequence is associated with a time value, the information item indicating whether the communication device is connected to or disconnected from the wireless network of the environment at the time value. The sequence for example comprises information items indicating a device arrival event of the communication device occurring at the associated time value. The sequence further comprises some other information items indicating a device departure event of the communication device occurring at the associated time value. In other words, device arrival and departure events respectively indicate that the communication device connected to or disconnected from the wireless network at the corresponding time value. By connecting / disconnecting at the time value it is meant here within a time interval around the time value. Indeed, the information item does not indicate that the communication device connected (disconnected) to the wireless network exactly at the time value but rather around the time value, i.e. within a time interval around the time value. Depending on the variants and the implementations, the time interval may vary from a few second to a few minutes.

In a variant, some information items indicate periods of time during which the communication device is connected to the wireless network, starting for example at the associated time value. Some other information items indicate periods of time during which the communication device is disconnected from the wireless network, also starting for example at the associated time value. Advantageously a period duration is further included in the information item.

In yet another variant, the sequence comprises only information items indicating periods of time during which the communication device is connected to the wireless network, the remaining periods of time being considered as the periods during which the communication device is disconnected from the wireless network. More generally any sequence of information items comprising indications of time periods during which the communication device is present in the environment and time periods during which the communication is not present in the environment (because being outside the environment) is compatible with the disclosed principles.

In a specific and non-limiting embodiment of the disclosed principles, successive time reports are processed for a plurality of devices and a plurality of sequences of information items is obtained, each sequence corresponding to a different device that has been detected successively connected and disconnected to the wireless network of the environment. Advantageously, sequences of information items for which a number of device arrival events and/or device departure events are below a given value for a given period of time are ignored, and not considered for the remaining steps of the method. Indeed, these sequences of information items correspond to irrelevant devices, not likely to belong to residents of the environment or to users frequently visiting the environment.

In the step S11, a set of temporal patterns of a first sensor of the environment is obtained. As illustrated in Figure 1, the step S11 is performed independently (for example in parallel) of the step S10. A pattern corresponds to a same event, represented by a set of data values optionally associated with a condition, and occurring several times pretty similarly. Taking a few examples, a specific user may pretty systematically turn on the heating system as she enters in the home and turn it off as she leaves, so that an increase of the ambient temperature can be observed after she enters and a decrease can be observed after she leaves. According to that example a first pattern may be the measured ambient temperature going over a specific value, a second pattern may be the measured ambient temperature going below the same or another specific value. For the sake of clarity and without limitation, the pattern associated with its occurring time values is called a temporal pattern. In another example, a user may systematically walk in the home in a specific order after entering in the home (entrance, toilets, kitchen, leaving room), activating presence detectors in the corresponding rooms in always the same order as she moves in the home, while other users do not have such a habit. According to that example, the pattern would be a sequence of presence detected events by different sensors in a specific order (entrance, toilets, kitchen, leaving room). Detecting over time such patterns representative of specific users and temporally matching them with the temporal presence of communication devices advantageously allows to associate patterns with communication devices and to identify users from further detected patterns as described later.

In a first variant, the first sensor is a continuous sensor measuring a value, continuously varying over time. Continuous sensors comprise for example and without limitation accelerometers, temperature sensors, light sensors, humidity sensors, vibration sensors, pressure sensors or power meters... The continuous value is sampled over time either by the first sensor itself or by the gateway periodically querying the first sensor, sampling the value over time as it queries the first sensor, so as to generate a time series.

In a second variant, the first sensor is a discrete sensor measuring categorical events, not necessarily being a numerical value, but rather being a symbol for example belonging to a bag of words. Discrete sensors comprise for example and without limitation motion sensors (ON/OFF), door sensors (OPEN/CLOSED), presence detectors (True/False), RFID readers (detected RFIG tags), types of songs played, drink requested... A discrete sample generated by a discrete sensor may be either time stamped by the sensor itself, or by the gateway as it queries the sensor, the gateway timestamping the sample with for example the query time value.

According to any of the above variants, a first sequence of timestamped data items is obtained from the first sensor, for example by the gateway, which further applies a pattern detection algorithm to the first sequence to obtain the set of data patterns, each pattern being associated with a plurality of occurring time values of the pattern.

In case the first sensor is a discrete sensor, the first sequence of timestamped data items corresponds to a sequence of timestamped samples obtained from the first sensor. A pattern in such a sequence of timestamped samples corresponds to a subsequence frequently occurring in the sequence. A set of temporal patterns is obtained by applying a sequential pattern mining algorithm, wherein each pattern of the set of temporal patterns is associated with a plurality of occurrences corresponding to a plurality of occurring time values. In a first example, a string mining algorithm is applied to the first sequence of timestamped data items, such as for example and without limitation the BLAST (Basic Local Alignment Search Tool) method. In a second example, a frequent itemset mining algorithm is applied to the first sequence of timestamped data items such as for example and without limitation the Apriori algorithm or the FP-growth technique.

In case the first sensor is a continuous sensor, the first sequence of timestamped data items corresponds to a time series obtained from the first sensor. A pattern of a time series corresponds to sub sequences of the time series being similar to each other, each sub sequence corresponding to an occurring time (for example the start of the subsequence) and a duration. Patterns in time series are also called motifs. In a first example, the set of temporal patterns is obtained by using a brute force approach, i.e. comparing all possible sub sequences of the time series to extract motifs (i.e. patterns). In a second example, approximate algorithms are used such as for example the technique disclosed by Spiegel et al. "Best Time: Finding Representatives in Time Series Datasets", published in the Proceeding of the European Conference on Machine Learning and Principles and Practice of Knowledge Discovery in Databases (ECML-PKDD) in 2014 pages 477-480. In such an approximate technique, sub sequences of the time series are clustered, and a subsequence close to the centroid is considered as the pattern representative of the cluster, each subsequence of a cluster being considered as a similar pattern with its own occurring time. In yet another example the MK (Mueen-Keogh) algorithm published by Mueen et al. "Exact Discovery of Time Series Motifs" in the Proceedings of the SIAM (Society for Industrial and Applied Mathematics) International Conference on Data Mining in 2009, is used. the MK algorithm identifies motifs by projecting candidate sub sequences onto new axes where the new coordinate of a subsequence for a given new axis is the distance to a heuristically chosen subsequence. Sub sequences that are close in the original space (and therefore similar in terms of distance) have a small distance in the new space. This property is used to efficiently identify sub sequences that are not similar. The MK algorithm constructs such a space, therefore efficiently identifying sequences that are different. The MK algorithm further performs a clustering with a reduced number of pairwise interaction to consider. More generally any pattern detection algorithm applicable to time series is compatible with the disclosed principles.

In an advantageous and optional variant, a time series obtained from a continuous sensor is discretized into a sequence of timestamped samples by applying a discretization algorithm such as for example and without limitation k-means or SAX (Symbolic Aggregate approximation) with a set of automatically tuned number of clusters. Sequential pattern mining algorithms are then advantageously applied to the discretized time series to obtain the set of temporal patterns.

In any of the variants described above the obtained set of temporal patterns comprises patterns wherein each pattern is associated with at least a set of occurring time values, corresponding to periods where a specific activity has been detected. Furthermore, the set of temporal patterns is associated with the first sensor from which the first sequence of timestamped data items is obtained. More generally, a plurality of sequences of timestamped data items are obtained from a plurality of sensors (each sequence being obtained from a different sensor and associated with that sensor). A plurality of sets of patterns are obtained, by applying a pattern detection algorithm to each sequence of timestamped data items, each set of temporal patterns corresponding to the sensor from which the sequence of timestamped data items is obtained.

In a specific and non-limiting embodiment, a second sequence of timestamped data items is obtained from a second sensor of the environment, the second sensor being either a discrete sensor or a continuous sensor, and a multi sequence pattern detection algorithm is applied to at least the first and the second sequences of timestamped data items for obtaining the set of temporal patterns. More generally a plurality of sequences of timestamped data items is obtained from a plurality of sensors of the environment, the sensors being either discrete or continuous sensors, and a multi sequence pattern detection algorithm is applied to the plurality of sequences of timestamped data items for obtaining the set of temporal patterns. Several known multi sequence pattern detection techniques can be used as for example the method published by Minnen et al. in the Proceedings of the seventh IEEE International Conference on Data Mining (ICDM) in 2007 "Detecting sub dimensional motifs: an efficient algorithm for generalized multivariate pattern discovery". A second example is the method disclosed by Lee et al. and published by Elsevier in the Data & Knowledge Engineering journal in 2009 "Mining closed patterns in multi-sequence time series databases". A third example is the method disclosed by Pei et al. in the IEEE Transactions on Knowledge and Data Engineering Volume 16, No11 in November 2004 "Mining sequential patterns by pattern growth: the PrefixSpan approach".

In an advantageous variant, the patterns or a set of temporal patterns obtained according to any of the above variant, are ordered by importance, for example according to the number of occurrences of the pattern in the set of temporal patterns. In yet another variant, in case of a plurality of sets of patterns, the patterns are ordered across the plurality of sets of patterns, according to a number of occurrences of the pattern within a given time period.

In the step S12, the set of temporal patterns is temporally matched to the sequence of information items in order to identify matching patterns corresponding to the communication device. More precisely the temporal matching of each pattern of the set of temporal patterns to the sequence of information items is evaluated. In other words, for each pattern, it is evaluated whether the occurrence time values of the pattern coincide with a period of presence or of absence of the communication device in the environment or with a transition between a period of presence and a period of absence and/or the reverse. Many techniques may be used for that purpose. In a first example, a time window is obtained around each time value of the sequence of information items associated with a device arrival or departure event of the communication device. The time windows are for example of a duration of two minutes and represent two minutes time periods during which a movement (arrival or departure) of the communication device associated with the user, has been detected. A matching score is then computed for each pattern of the set of temporal patterns by dividing a first number of time windows comprising an occurring time value of the pattern, by a second number of occurrences of the pattern outside any time window of the sequence of information items. In case there is no pattern in the set of patterns occurring outside any time window, the second number is equal to 1 in order to avoid dividing by zero. In a variant, the second number is the total number of occurrences of the pattern (inside and outside the windows). The first number is the number of times the pattern occurred while a movement of the communication device is being detected and is an indicator of the correlation of the pattern with an activity of the user. The second number, being the number of times, the pattern occurred as no movement of the communication device is detected is a further indicator of the correlation of the pattern with any activity of the user. The higher the matching score, the higher the correlation of the pattern with an activity of the user and reciprocally, the lower the matching score, the lower the correlation of the pattern with any activity of the user.

In a second example, a set of time windows is obtained wherein the communication device was detected connected to the wireless network during each time window. Such time windows, called presence time windows, for example are the time periods starting with a device arrival event and stopping with the following device departure event. The matching score is computed as for the first example, i.e. by dividing a first number of presence time windows comprising at least one occurring time value of the pattern, by a second number of occurrences of the pattern, occurring outside any presence time window of the sequence of information items. Same variant and restriction as for the first example (to avoid dividing by zero) are applicable to the second example. Any technique for computing a matching score evaluating the temporal correlation of each pattern of the set of patterns with the temporal presence of the communication device is compatible with the disclosed principles.

In the step S14, at least one pattern of the set of patterns is associated with the sequence of information items based on the temporal matching of the at least one pattern to the sequence of information items. More precisely the matching scores of the patterns of the set of patterns are evaluated to identify at least one pattern to be associated with the sequence of information items. In a first example, patterns of the set of temporal patterns for which the matching score is above a given value, for example 0.5, are associated with the sequence of information items. In a second example, the patterns which matching score belongs to the top k matching scores, k being a integer value for example between two and ten (depending on the number of patterns), are associated with the sequence of information items. Beyond these two examples any technique for evaluating the matching scores to associate at least one pattern with the sequence of information items is compatible with the disclosed principles.

In a specific and non-limiting embodiment, considering a plurality of communication devices, a plurality of sequences of information items are obtained, each sequence of information items being representative of a temporal presence of a different communication device of the plurality of communication devices. According to this specific and non-limiting embodiment, the temporal matching of at least one pattern to the plurality of sequences of information items is evaluated. To that end a plurality of matching scores is obtained, one matching score being computed for ranking the temporal matching of the at least one pattern to each sequence of the plurality of sequences, according to any variants described earlier. The highest matching score among the plurality of matching scores designates the sequence of information items (and thus the associated communication device) having the best match with the at least one pattern. In that specific and non-limiting embodiment, the at least one pattern is associated with the sequence of information items for which the matching score is the highest among the matching scores for the plurality of sequences of information items. This variant is advantageous in case a plurality of communication devices is detected in the environment, as it allows to identify for each pattern the communication device with the best match.

In the step S16, a subsequent set of patterns is obtained from one or more sensors of the environment according to any variant and/or embodiment previously described. More precisely a subsequent sequence of data items is obtained from the one or more sensors of the environment and a pattern detection algorithm is applied to the subsequent sequence of data items according to any variant and/or embodiment previously described to obtain a subsequent set of patterns. In case the associated pattern (the pattern that has been associated to the communication device according to any variant and/or embodiment previously described) is detected in the subsequent set of patterns, the user (associated with the communication device) is identified by the detection of the pattern. In other words, subsequent patterns of the subsequent sequence of patterns are compared with the associated patterns of the set of patterns, and when a subsequent pattern is similar to an associated pattern, the corresponding user is identified based on the detection of the subsequent pattern. Advantageously, the user is identified by the detection of a subsequent pattern similar to an associated pattern even if the communication device is disconnected from the wireless network as the subsequent similar pattern is detected. Indeed, the disclosed principles allow to train a model for identifying users based on a temporal presence of a communication device, relying on the fact that the user carries the communication device with her most of the time, but not necessarily all the time. It may indeed happen that the user left her communication device away from the environment, or that the communication device is in the environment despite being powered off. The disclosed principles are advantageous as they do not require the communication device to be systematically physically located and powered in the environment for training and use the model.

In a specific and non-limiting embodiment, a user profile, associated with the communication device, is computed, for example by the gateway. Any technique for computing a user profile in any device beyond a gateway is compatible with the disclosed principles. According to this specific and non-limiting embodiment, as a subsequent pattern is detected in a subsequent set of patterns, the subsequent pattern being associated with the communication device according to any previously described variant and/or embodiment, the user profile is advantageously updated with the detected subsequent pattern. Moreover, the user profile associated with the communication device is updated only with detected subsequent patterns that have been associated with the communication device. In case a specific subsequent pattern is detected by the gateway, but is not associated with the communication device, or is associated with another communication device, the user profile is not updated with that detected specific subsequent pattern, as it is very likely resulting from an activity of a different user.

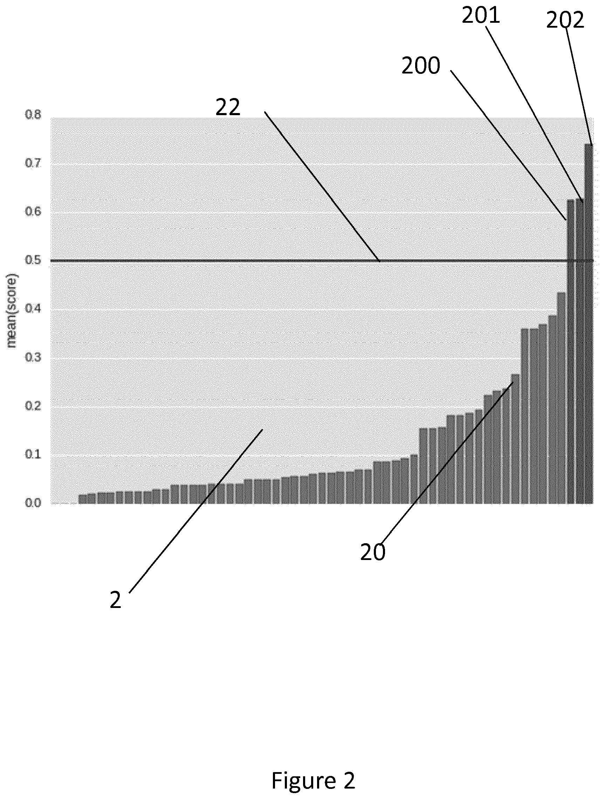

**Figure 2** illustrates an example of temporal matching scores according to a specific and non-limiting embodiment of the disclosed principles. Figure 2 comprises a plot 2 of histograms of matching scores 20, 200, 201, 202, wherein each histogram corresponds to the value of a matching score Si of a pattern Pj to a sequence of information items, associated with a device Dk. In other words, each histogram in the plot corresponds to a different (Pj, Dk) pair. When a matching score 200, 201, 202 is above a given value 22 the corresponding pattern Pj is associated with the corresponding communication device Dk. When a matching score 20 is below the given value 22 the corresponding pattern Pj is not associated with the corresponding communication device Dk.

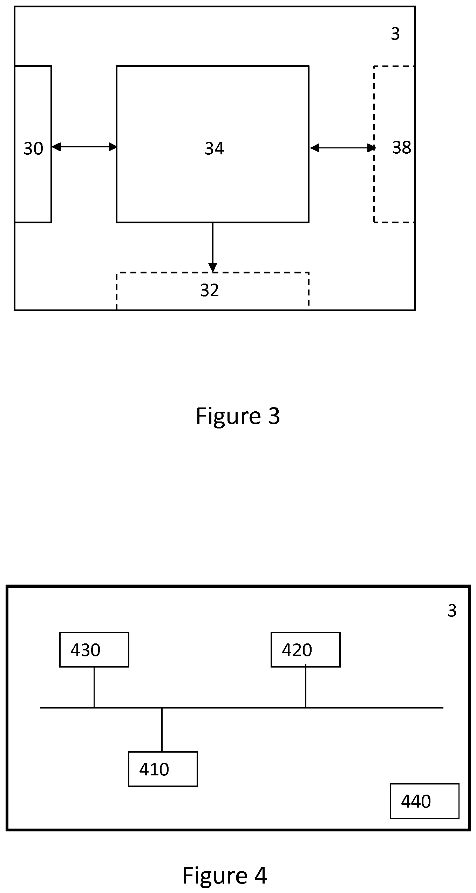

**Figure 3** depicts a processing device 3 for identifying a user in an environment. According to a specific and non-limiting embodiment, the processing device 3 comprises at least one wireless network interface 30 configured to send and receive data to/from at least one wireless communication devices. For example, the wireless network interface 30 is configured to detect wireless communication devices sending data over the wireless network. According to a specific and non-limiting embodiment the wireless network interface 30 is further configured to collect data from external sensors. According to different embodiments of the disclosed principles, the wireless network interface belongs to a set comprising:
- IEEE 802.11 comprising any variation of the IEEE 802.11 standard;
- Bluetooth in any of its variant
- ZigBee in any of its variant,
- Zwave in any of its variant.
According to a specific and non-limiting embodiment, the device 3 comprises several wireless interfaces of different types (IEEE 802.11 and Bluetooth and/or ZigBee and/or Zwave). More generally any network interface allowing to send and receive data to/from a wireless device, is compatible with the disclosed principles.

According to a specific and non-limiting embodiment, the processing device 3 comprises optional embedded sensors 38 configured to measure data. According to different embodiments of the disclosed principles, the sensors (embedded or external) belong to a set comprising:
- infrared sensors,
- magnetic door sensors,
- temperature sensors,
- light sensors,
- humidity sensors,
- vibration sensors,
- movement sensors (such as accelerometers or geophones),
- pressure sensors,
- radio frequency identification (RFID) sensors,
- power meters.

The at least one wireless network interfaces 30 and the optional embedded sensors 38 are linked to a processing module 34 configured to identify a user in an environment. The processing module 34 is configured to obtain a sequence of information items representative of a temporal presence of a communication device in the environment, the communication device being associated with the user. The processing module 34 is further configured to obtain a set of temporal patterns of a first sensor in the environment and to associate a pattern of the set of temporal patterns with the sequence of information items based on evaluating a temporal matching of the temporal pattern to the sequence of information items. The processing module 34 is further configured to identify the user by a detection of the pattern in a subsequent set of patterns. The identified user is for example transmitted as a data packet towards the wireless network interface 30, for being received and displayed on another device. In another example, the identified user is used by the processing module 34 to update a profile of the user with the detected pattern. In yet another example the identified user is sent to an output 32 such as for example a display means. According to a particular embodiment, the display means is external to the device and the output 38 sends the identified user to an external display means. According to different embodiments of the disclosed principles, the display means, internal or external, belongs to a set comprising:
- a personal computer screen;
- a TV screen;
- a tablet;
- a smartphone screen.
More generally any display means, any (embedded or external) sensor and any network interface are compatible with the disclosed principles.

**Figure 4** represents an exemplary architecture of the processing device 3 according to a specific and non-limiting embodiment, where the processing device 3 is configured to identify a user in an environment. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carry out the processing method described with reference to figure 1. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).
According to exemplary and non-limiting embodiments, the processing device 3 is a device, which belongs to a set comprising:
- a wireless access point device;
- a Internet gateway device;
- a set top box device;
- a smartphone;
- a digital media player device;
- a TV device;
- a mobile device;
- a game device;
- a tablet (or tablet computer);
- a laptop;
- a communication device.

## Claims

1. A method for identifying a user in an environment, the method comprising:
- obtaining (S10) a sequence of information items representative of a presence of a communication device in the environment, the communication device being associated with the user;
- obtaining (S11) a set of patterns of a first sensor in the environment;
- associating (S14) a pattern of the set of patterns with the sequence of information items based on evaluating a temporal matching of the pattern to the sequence of information items;
- identifying (S16) the user by a detection of a subsequent pattern, the subsequent pattern being similar to the pattern of the set of patterns.

2. The method according to claim 1, wherein obtaining the sequence of information items comprises monitoring whether the communication device is connected to a wireless network of the environment.

3. The method according to claim 2, wherein each information item of the sequence is associated with a time value, the information item indicating whether the communication device is connected to or disconnected from the wireless network of the environment at the time value.

4. The method according to claim 3, further comprising obtaining a first sequence of timestamped data items from the first sensor and applying a pattern detection algorithm to the first sequence of timestamped data items to obtain the set of patterns, each pattern being associated with a plurality of occurring time values.

5. The method according to claim 4, further comprising obtaining a second sequence of timestamped data items from a second sensor of the environment and applying a multi sequence pattern detection algorithm to at least the first and the second sequences of timestamped data items to obtain the set of patterns.

6. The method according to any of claims 3 to 5, wherein evaluating the temporal matching comprises
- obtaining a time window around each time value of the sequence of information items;
- obtaining a matching score of the pattern to the sequence of information items by dividing a first number of time windows comprising an occurring time value of the pattern, by a second number of occurrences of the pattern outside any time window of the sequence of information items.

7. The method according to claim 6, wherein the pattern is associated with the sequence of information items in case the matching score is above a value.

8. The method according to claim 6, further comprising
- obtaining a plurality of sequences of information items each sequence of information items being representative of a temporal presence of a different communication device;
- evaluating the temporal matching of the pattern to each sequence of the plurality of sequences, wherein a plurality of matching scores of the pattern is obtained, each matching score corresponding to a different sequence of the plurality of sequences;
- associating the pattern with the sequence of the plurality of sequences corresponding to the highest matching score among the obtained plurality of matching scores.

9. The method, according to any of claims 1 to 8, further comprising updating a profile associated with the user based on the detection of the subsequent pattern.

10. The method, according to any of claims 1 to 9, wherein the user is identified by the detection of the subsequent pattern in the subsequent set of patterns, although the communication device is not present in the environment.

11. A device (3) for identifying a user in an environment, the device comprising means (34) for:
- obtaining a sequence of information items representative of a presence of a communication device in the environment, the communication device being associated with the user;
- obtaining a set of patterns of a first sensor in the environment;
- associating a pattern of the set of patterns with the sequence of information items based on evaluating a temporal matching of the pattern to the sequence of information items;
- identifying the user by a detection of a subsequent pattern, the subsequent pattern being similar to the pattern of the set of patterns.

12. The device according to claim 11, wherein means for obtaining the sequence of information items further comprises means for monitoring whether the communication device is connected to a wireless network of the environment.

13. The device according to claim 12, wherein each information item of the sequence is associated with a time value, the information item indicating whether the communication device is connected to or disconnected from the wireless network of the environment at the time value.

14. The device according to claim 13, further comprising means for obtaining a first sequence of timestamped data items from the first sensor and applying a pattern detection algorithm to the first sequence of timestamped data items to obtain the set of patterns, each pattern being associated with a plurality of occurring time values.

15. A computer program product for identifying a user in an environment, the computer program product comprising program code instructions executable by a processor for:
- obtaining a sequence of information items representative of a presence of a communication device in the environment, the communication device being associated with the user;
- obtaining a set of patterns of a first sensor in the environment;
- associating a pattern of the set of patterns with the sequence of information items based on evaluating a temporal matching of the pattern to the sequence of information items
- identifying the user by a detection of the pattern in a subsequent set of patterns.
